# EUROPÄISCHE PATENTANMELDUNG

(11) **EP 3 363 874 A1**
(43) Veröffentlichungstag der Anmeldung: **22.08.2018**
(21) Anmeldenummer: 17156998.1
(22) Anmeldetag: 20.02.2017
(51) Int. Cl.: C09J 7/04, C09J 7/02

(54) **ABDECKMATERIAL FÜR GROSSFLÄCHIGES ABKLEBEN MIT UNTERSCHIEDLICH STARK KLEBENDEN BEREICHEN**

(71) Anmelder: AMC AG, 24568 Kaltenkirchen (DE)
(72) Erfinder: LEICHNER, Wolfgang, 22956 Trittau (DE); LATZ, Henning, 21337 Lüneburg (DE)
(74) Vertreter: Eisenführ Speiser

(57) **Zusammenfassung**

Die Erfindung betrifft ein Abdeckband, das a) eine Trägerbahn mit einem ersten Bahnbereich und einem zweiten Bahnbereich und b) einer ersten Haftkleberschicht in dem ersten Bahnbereich und einer zweiten Haftkleberschicht in dem zweiten Bahnbereich umfasst. Die Klebkraft in dem ersten Bahnbereich ist höher als die Klebkraft in dem zweiten Bahnbereich und die erste Haftkleberschicht und die zweite Haftkleberschicht sind auf der ersten Seite der Trägerbahn aufgebracht.

## Beschreibung

Die vorliegende Erfindung betrifft ein Abdeckband für Mal- oder Lackierarbeiten.

Bei Anstrich- und Renovierungsarbeiten müssen in einem Vorbereitungsschritt nicht zu behandelnde oder vor Verunreinigungen zu schützende Oberflächen abgedeckt werden. Unzureichendes oder mangelhaftes Abdecken kann zu aufwändigen Nach- oder Reinigungsarbeiten, zum Teil aber auch zu schwer reparabler Schädigung des Untergrundes führen. Dies verringert die Arbeitseffizienz. Für den professionellen Handwerker ergibt sich in solchen Fällen zudem eine verminderte Profitabilität des entsprechenden Arbeitsauftrags.

Das Malerhandwerk und andere Gewerke sind daher an schnell und einfach anzuwendenden, verlässlichen Lösungen zum Abdecken und Schützen interessiert. Für gute Anwendungseigenschaften muss ein Abdeckmaterial zunächst leicht und komfortabel anzubringen und abzulösen sein. Weiterhin ist erwünscht, dass es nicht zum Hinterlaufen von Lack oder Farbe kommt und dass auf den Abdeckmaterialien aufgebrachte Farben oder Lacke ausreichend fixiert werden, sodass sie beim Entfernen des Abdeckmaterials nicht bröckchenartig abplatzen und die Umgebung verunreinigen.

Beim Aufbringen von Farben und Lacken bei Anstrichen und Renovierungen im Innen- und Aussenbereich mittels Pinsel oder Rolle werden die Bodenflächen typischerweise mit Folien, Vliesen oder einfachen Papieren abgedeckt. Zur Erzielung randscharfer Kanten werden zum Schutz des Untergrundes Abdeckklebebänder verwendet, wobei die Breite der kommerziell angebotenen Bänder üblicherweise 19 bis 50 mm beträgt. Sollen größere Flächen, wie z.B. Einbaumöbel, vor Farbspritzern geschützt werden, werden einfache Abdeckmaterialien (wie Folien oder Papiere) zusammen mit Abdeckklebebändern befestigt, oder es werden vorproduzierte Kombinationen benutzt, wie sie nachfolgend beschrieben sind.

Zudem werden seit einigen Jahren Beschichtungen, die bisher mit Pinsel oder Rolle appliziert worden sind, im Malerhandwerk und zum Teil auch im Heimwerkerbereich durch Spritzbeschichtung der Oberflächen ausgeführt. So werden nicht nur Möbel, sondern auch Türen und Türzargen, Bauelemente (wie Wandbekleidungen) sowie Wände und Decken per Spritzauftrag beschichtet. Die Vorteile beim Aufbringen von Beschichtungen per Spritzgerät liegen neben der besseren Gleichmäßigkeit des Materialauftrags insbesondere darin, dass eine solche Beschichtungsarbeit deutlich schneller ist, d.h. dass eine höhere Flächenleistung pro Zeiteinheit erzielt wird, im Vergleich zum herkömmlichen Auftrag per Pinsel oder Rolle.

Das Spritzlackieren und allgemein das Aufbringen von Beschichtungen im Spritzverfahren werden außerdem in den vergangenen Jahren durch die lebhafte Weiterentwicklung von Spritzgeräten gefördert. Beispielsweise stehen handlichere und weniger sogenannten *Overspray* erzeugende Maschinen zur Verfügung. Höhere Flächenleistungen moderner Spritzmaschinen erfordern aber, dass die Umgebung der zu beschichtenden Fläche durch sorgfältiges Anbringen von ausreichend breiten Abdeckmaterialien geschützt wird. Auch wenn moderne Spritzgeräte wie z.B. das "XVLP-System" der Fa. Brillux, Münster, Bundesrepublik Deutschland, oder das Airless-System wie in den Prospray-Geräten der Fa. J. Wagner, Markdorf, Bundesrepublik Deutschland, nur wenig Overspray produzieren, erzeugen Spritzverfahren im Randbereich doch stets einen gewissen Spritznebel, der durch Abdeckungen abgefangen werden muss. Es müssen daher üblicherweise breitere Bereiche geschützt werden, verglichen mit der herkömmlichen Verarbeitung von Beschichtungen mittels Pinsel oder Rolle.

Stand der Technik ist es, die jeweiligen Kanten des zu beschichtenden Objekts mit Abdeckklebebändern abzukleben und das Umfeld durch Anbringung von einfachen Abdeckpapieren oder -folien - wiederum fixiert mit Klebebändern - zu schützen. Effektiver ist es, sogenannte 2-in-1-Produkte zu verwenden. Derartige Produkte bestehen aus Rollenware aus einem Klebestreifen, welcher so auf einen Folien- oder Papierstreifen laminiert ist, dass noch ein klebender Bereich des Bandes zur Fixierung am Untergrund verbleibt. Produkte dieser Art sind z.B. unter den Handelsnamen KIP Masker, Kip GmbH, Bocholt, Bundesrepublik Deutschland, 3M™ Scotch Ready Mask™, 3M, St. Paul, Minnesota, USA, oder tesa Easy-Cover^{®}, tesa, Norderstedt, Bundesrepublik Deutschland, im Handel.

Mit diesen Materialien lässt sich in einem Arbeitsschritt ein Klebestreifen randscharf - z.B. an der Kante einer Türzarge - anbringen, und gleichzeitig schützt ein ausreichend breiter, lose aufliegender Papier- oder Folienstreifen den weiteren Bereich der Umgebung. Derartige 2-in-1-Produkte werden häufig zum schnellen Abdecken von Flächen bei allgemeinen Renovier- und Anstricharbeiten aber auch beim Spritzlackieren/Spritzbeschichten eingesetzt. Beim Spritzlackieren oder beim Spritzbeschichten sind nämlich in der Regel zwingend breitere Abdeckungen im Randbereich erforderlich als sie üblicherweise allein mit herkömmlichen Klebebändern erzeugt werden können.

Die US 3 503 495 B1 beschreibt, dass sich dehnbare Abdeckbänder aus einem Papiermaterial herstellen und leicht von Hand reißen lassen. Weiter entwickelte 2-in-1-Abdeckmaterialien sind z.B. in EP 0 999 251 A offenbart, die ein Abdeckband aus a) einem temperaturbeständigen Klebeband mit Papierträger und Selbstklebmasse, b) einem im Randbereich der Selbstklebmasse befestigten Abdeckpapier für gute Farbhaftung und Saugfähigkeit sowie c) einer in dem Randbereich der Selbstklebmasse befestigten Abdeckfolie beschreibt, wobei d) die Abdeckfolie das Abdeckpapier an der Seite vollständig abdeckt, an der sich die Selbstklebmasse des Klebebandes befindet und damit im aufgeklebten Zustand das Abdeckpapier hinterlegt. Das in der EP 0 999 251 A vorgestellte Produkt bietet insbesondere bei der Anwendung beim Lackieren von Fahrzeugen den Vorteil, dass Sprühnebel durch das Kraftpapier besser als durch die unterliegende Abdeckfolie fixiert wird. Ein solches Abdeckband ist zum einen aufwändig herzustellen, weil zwei Flächengebilde auf der Klebmasse appliziert werden müssen. Zum anderen stellen i) Klebeband mit Papierträger und Selbstklebmasse, ii) Klebeband mit Papierträger und Selbstklebmasse, ziehharmonika-artig gefaltetem Abdeckpapier und aufkaschierter Abdeckfolie und iii) ziehharmonika-artig gefaltetes Abdeckpapier und Abdeckfolie unterschiedlich dicke Bereiche des Abdeckbands dar, was es herausfordernd macht, das Abdeckband als Rolle bereitzustellen. Zudem muss bei der Anwendung des Produkts trotz des hohen konstruktiven Aufwands die Abdeckfolie ausreichend groß gewählt werden oder zusätzlich fixiert werden, damit kein Sprühnebel hinter die Abdeckung gelangt.

Die DE 29 617 896 U1 beschreibt eine Abdeckbahn für Mal- und Lackierarbeiten mit einer saugfähigen Materialbahn, die an einer Längsseite einen Klebestreifen aufweist, wobei die Materialbahn einseitig eine flüssigkeitsdichte Schicht aufweist und wobei der Klebestreifen und die flüssigkeitsdichte Schicht auf derselben Seite der Materialbahn angeordnet sind. Die saugfähige Materialbahn nimmt Lacktropfen auf. Die flüssigkeitsdichte Schicht verhindert, dass aufgenommene Lacktropfen die Abdeckbahn durchnässen. Ebenfalls offenbart wird in der DE 29 617 896 U1, dass die Abdeckbahn aufgerollt werden kann. Hinweise, wie die saugfähige, aber feuchtigkeitsdichte Abdeckbahn in der Fläche zu fixieren ist, finden sich in der DE 29 617 896 U1 nicht.

Die US 4 889 759 B1 offenbart ein Abdeckpapier mit einer dünnen Kunststofffolie, die zumindest einfach gefaltet ist, und mit einer Release-Beschichtung auf der anderen Seite, wobei ein Teil des dicken Klebebands mittels des Haftklebstoffs mit einer Kante der Folie verklebt ist.

Die EP 0 841 384 A2 offenbart eine Abdeckbahn bestehend aus einer Materialbahn, die zu mindestens zwei Faltlagen zusammengefaltet ist, wobei ein Längsstreifen der Materialbahn über die übrigen Faltlagen hinaussteht und an dem Längsstreifen ein Klebeband befestigt ist, das wiederum seitlich über den Längsrandstreifen übersteht. Auf die kleberfreie Seite des Klebebandes ist ein das Klebeband bedeckendes Deckband aufgebracht. Dadurch, dass an i) die Materialbahn mit mindestens zwei Faltlagen angrenzend ii) Klebeband und aufliegendes Deckband vorgesehen sind, ist die Abdeckbahn gemäß EP 0 841 384 A2 einfacher als Rolle bereitzustellen. Diese Konstruktion soll es ermöglichen, auch dünne Klebebänder in Kombinationen mit vielfach gefalteten und damit dicken Folien einzusetzen, indem mit dem zusätzlich aufkaschierten Deckband eine für das problemlose Rollenwickeln ausreichende Dicke des klebenden Bereichs des Produkts entsteht. Ein weiterer Vorteil besteht darin, dass die mechanischen Eigenschaften des Klebebands durch das Deckband verstärkt werden können. Außerdem soll durch die längere Lauflänge der zwei dabei verwendeten, eher dünneren Bänder (Klebeband und Deckband) die Herstellung erleichtert werden. Das präzise Zusammenkaschieren von drei Rohmaterialen ist jedoch deutlich komplexer und fehleranfälliger als das Zusammenführen von lediglich zwei Materialbahnen. Der in EP 0 841 384 A2 vorgeschlagene Produktaufbau führt zudem zu höheren Kosten für die Ausgangsmaterialien, im Vergleich mit der Verwendung nur eines (entsprechend dicken) Klebebands.

Bisher bekannte Verfahren und Abdeckmaterialien für großflächige Abdeckungen, bestehend aus Klebeband und Abdeckbahn, weisen also üblicherweise den Nachteil auf, dass in der Praxis oft ein weiterer Klebestreifen am äußeren Rand angebracht werden muss, der verhindert, dass die Folie oder das Papier vor oder während der Anwendung zurückfällt oder umschlägt oder seitlich vom Untergrund absteht, wodurch z.B. beim Spritzprozess die Gefahr entstehen würde, dass Sprühnebel hinter die Abdeckung gelangt. Zudem kann es dazu kommen, dass sich der weitere Klebestreifen löst und versehentlich zurückgefallene oder umgeschlagene Folie (oder Papier) mit Beschichtungsmaterial verunreinigt wird und dann nicht mehr am Untergrund befestigt werden kann; in diesem Fall muss das Abdeckmaterial letztendlich vollständig entfernt und durch neues Abdeckmaterial ersetzt werden.

Im Übrigen muss der zusätzliche, zur Fixierung der Abdeckbahn eingesetzte Klebestreifen zumindest mittelstark kleben (d.h. eine Klebkraft von ca. >1,5 N/cm nach PSTC-101 haben, gemessen auf Edelstahl), um die größere Fläche Abdeckbahnmaterial aus Papier oder Folie sicher zu halten. Dadurch ergibt sich das Risiko, dass der Untergrund beim Entfernen durch Ausreißen beschädigt wird. Dies liegt daran, dass viele Wandoberflächen, wie z.B. Tapeten und Anstriche auf mineralischen Untergründen, empfindlicher sind als die Beschichtungen auf Bauteilen (z.B. Lack auf Türrahmen, Fensterprofilen etc.), auf denen wiederum typischerweise Abklebebänder eingesetzt werden.

Aufgabe der vorliegenden Erfindung war es demzufolge, ein Abdeckband zur Verfügung zu stellen, mit dem in einem Arbeitsschritt eine breite Abdeckung um einen oder auf einem zu beschichtenden Gegenstand angebracht werden kann, wobei das Abdeckklebeband ohne notwendige Fixierung mit zusätzlichem Klebeband sicher halten und ein Hinterwandern von Verunreinigungen wie Spritznebel oder Staub verhindern soll. Gleichzeitig soll das Abdeckband beschädigungsfrei auch von empfindlichen Untergründen entfernt werden können und saubere Farbkanten ergeben, d.h. randschlüssig sein.

Gelöst wird diese Aufgabe gemäß Anspruch 1 durch ein erfindungsgemäßes Abdeckband mit einem (gegebenenfalls schmaleren) stärker klebenden Bereich A und einem (gegebenenfalls breiteren) schwächer klebenden Bereich B. Das erfindungsgemäße Abdeckband weist also unterseitig mindestens zwei streifenförmige Bereiche von Haftkleberbeschichtungen auf, welche sich in ihrer Haftfähigkeit unterscheiden. Vorzugsweise wird das erfindungsgemäße Abdeckband in aufgerollter Form bereitgestellt.

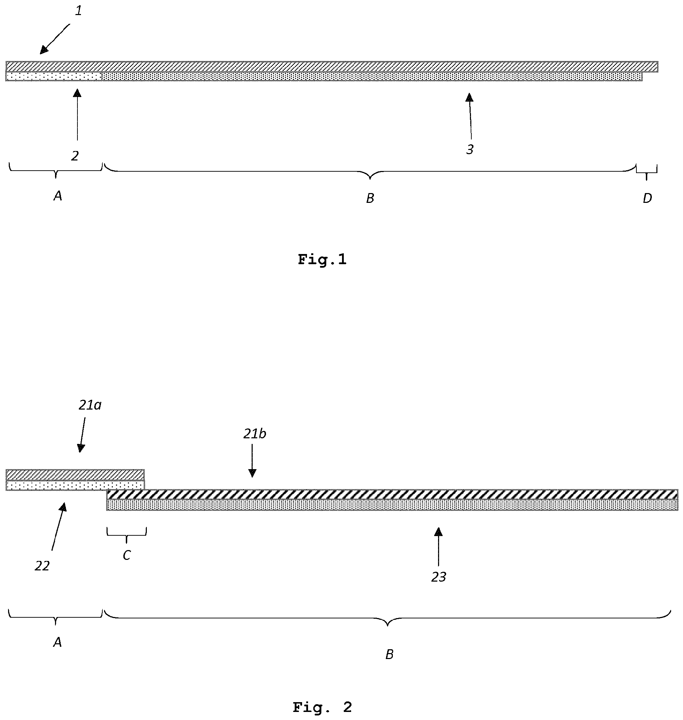

Das erfindungsgemäße Abdeckband kann gemäß einer ersten Ausführungsform - wie in Fig. 1 schematisch dargestellt - ein einziges Trägermaterial aufweisen, wie z.B. aus Papier (z.B. unbehandelt, imprägniert, dichtend und/oder wasserabweisend beschichtet) oder aus einer Folie oder aus einem textilen Material, oder aus Kombinationen der vorgenannten Materialien.

Das erfindungsgemäße Abdeckband kann gemäß einer weiteren Ausführungsform - vergleiche die Schemaskizze in Fig. 2 - aus einem Klebeband bestehen, welches in der Art der marktüblichen 2-in-1-Produkte zum Teil auf ein weniger stark haftendes Abdeckmaterial fixiert ist, wobei sich wie bei der ersten Ausführungsform durch den erfindungsgemäßen Einsatz eines leichtklebenden flächigen Abdeckmaterials anstelle einer simplen Folie oder Papiers der deutliche Vorteil einer sicheren und schnelleren Anwendung ergibt.

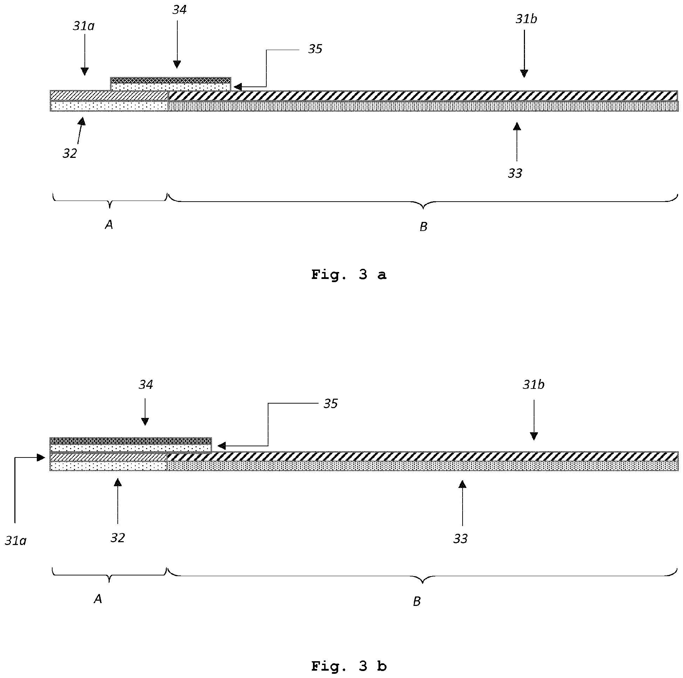

Als weitere, schematisch in Fig. 3a und 3b verdeutlichte Ausführungsform, umfasst das erfindungsgemäße Abdeckband zwei Klebebandflächen, die an einer Kontaktlinie durch ein darüber angebrachtes weiteres Klebeband oder ein anderes Fixiermittel, z.B. durch einen mit Strukturkleber befestigten Streifen, verbunden sind, wobei typischerweise das breitere Klebeband, welches das eigentliche, flächige Abdeckmaterial darstellt, schwächer klebt als das schmale Band. Alternativ ist es möglich, die leichter klebende Bahn auf dem stärker klebenden Streifen anzubringen.

Für eine bessere Handhabbarkeit wird das erfindungsgemäße Abdeckband in jeder der drei beschriebenen Ausführungsformen üblicherweise in aufgerollter Form vertrieben.

Das erfindungsgemäße Abdeckband ist besonders für großflächiges Abdecken und Schützen geeignet und dabei schneller und sicherer anwendbar als herkömmliche Materialien.

Erfindungsgemäß wird somit ein Abdeckband bereitgestellt, das umfasst
a. eine Trägerbahn 1 mit einem ersten Bahnbereich A und einem zweiten Bahnbereich B und
b. einer ersten Haftkleberschicht 2 in dem ersten Bahnbereich und einer zweiten Haftkleberschicht 3 in dem zweiten Bahnbereich.

Bei dem erfindungsgemäßen Abdeckband
i) ist die Klebkraft in dem ersten Bahnbereich A höher als die Klebkraft in dem zweiten Bahnbereich B und
ii) sind die erste Haftkleberschicht 2 und die zweite Haftkleberschicht 3 auf der ersten Seite der Trägerbahn 1 aufgebracht.

Der erste und der zweite Bahnbereich müssen nicht direkt aneinander anschließen und das erfindungsgemäße Abdeckband kann auch mehr als zwei Bahnbereiche aufweisen.

Vorzugsweise weist die Trägerbahn auf der ersten Seite zwischen dem ersten Bahnbereich und dem zweiten Bahnbereich einen dritten Bahnbereich C auf, wobei der dritte Bahnbereich vorzugsweise nicht mit Kleber beschichtet ist (vgl. Fig. 4f) oder keine offene Kleberbeschichtung aufweist (vgl. Fig. 5, Fig. 6).

Alternativ ist es möglich, dass der erste Bahnbereich direkt an den zweiten Bandbereich anschließt. Dies ermöglicht es, dass der zweite Bahnbereich (dessen Klebkraft geringer ist als die Klebkraft in dem ersten Bahnbereich) eine besonders geringe Klebkraft aufweist. Dies stellt sicher, dass das Abdeckband vollständig auf dem Untergrund haftet, und zwar ohne dass die Klebkraft im zweiten Bahnbereich unnötig hoch sein muss, wodurch das Risiko des Abreißens von beispielsweise Wandfarbe vom Putzuntergrund vermindert wird. Außerdem ist damit das spätere Entfernen des Abdeckbands besonders komfortabel, da beim Abziehen des erfindungsgemäßen Abdeckbands nach Gebrauch wenig Kraft erforderlich ist.

### Materialien für das Abdeckband

Als Trägermaterial des erfindungsgemäßen Abdeckbands sind beispielsweise diejenigen Materialien geeignet, die üblicherweise für Abklebebänder für Mal- und Lackierarbeiten verwendet werden.

So kann der Träger des erfindungsgemäßen Abdeckbands z.B. aus Papieren, Folien oder Textilmaterial oder Laminaten oder Kombinationen der Vorgenannten bestehen, wobei Trägerdicken von 15 bis 250 µm eingesetzt werden können. Die Trägermaterialien können zusätzlich weitere Funktionsschichten aufweisen, wie z.B. eine Primerschicht zur Verbesserung der Anbindung der Haftklebmasse, oder zur Verbesserung des Abrollverhaltens eine oder mehrere Releaseschichten auf der der Klebmasse abgewandten Seite tragen. Weiterhin ist es möglich, dass die Trägerpapiere oder Textilmaterialien (wie z.B. Vliese oder Gewebe) imprägnierend oder deckend mit Kunststoffschichten ausgerüstet werden, um die Dichtigkeit, Festigkeit oder Wasserresistenz zu verbessern.

Als Trägermaterialien aus Papier kommen bevorzugt Kraftpapiere in Betracht. Darüber hinaus lassen sich der besseren Umweltfreundlichkeit wegen, oder aus Kostengründen, Papiere einsetzen, welche aus recycelten Fasern oder teilweise aus recycelten Fasern erzeugt wurden. Es können ferner gekreppte oder ungekreppte Papierträger oder nach dem Cluepak-Verfahren hergestellte Papiere verwendet werden.

Besonders gut eignen sich Seidenpapiere oder solche des Washi-Typs (Japanpapier), da mit diesen besonders glatten und biegeweichen Papieren ein hoher Verarbeitungskomfort und (bei entsprechender Schnittgüte) in der Anwendung sehr präzise Farb- und Lackkanten erreicht werden können. Werden Seidenpapier oder Washi-artige Trägerpapiere verwendet, eignen sich bevorzugt solche mit Grammaturen von ca. 40 bis 100 g/m². Grammatur bezieht sich dabei auf das Gesamtträgerpapiergewicht (dieses setzt sich zusammen aus der Summe des Flächengewichts des Rohpapiers und der entsprechenden, jeweils optionalen Funktionsschichten wie Imprägnierung, Primer, Topcoat (Primer für Release) und Releaseschicht).

Bevorzugt weist die Trägerbahn des erfindungsgemäßen Abdeckbands auf der ersten Seite neben dem zweiten Bahnbereich einen äußeren Bahnbereich D auf. Besonders bevorzugt ist dieser äußere Bahnbereich D nicht mit Kleber beschichtet, wie es in Fig. 1 gezeigt ist. Dies erleichtert, das erfindungsgemäße Abdeckband nach Gebrauch vom Untergrund abzuheben und zu entfernen, ohne dass das Trägermaterial im ersten Bahnbereich A (der bei der Anwendung typischerweise mit der größten Menge Beschichtungsmaterial in Kontakt kommt und der letztendlich die Beschichtungskante ergibt) berührt werden muss. Vorzugsweise wird das erfindungsgemäße Abdeckband also nach Gebrauch beginnend mit dem zweiten Bahnbereich B vom Untergrund entfernt.

Demgegenüber ist es bevorzugt, dass der erste Bahnbereich A mit der ersten Haftkleberschicht 2 mit dem Trägermaterial abschließt. Dadurch ist sichergestellt, dass das Trägermaterial den Untergrund in demjenigen Bereich ausreichend schützt und nicht von dem Beschichtungsmaterial unterwandert wird, der bei der Anwendung typischerweise mit der größten Menge Beschichtungsmaterial (z.B. Farbe oder Lack) in Kontakt kommt.

Zudem ist bei dem erfindungsgemäßen Abdeckband bevorzugt, dass die erste Haftkleberschicht 2 in dem ersten Bahnbereich A mindestens in einem äußeren Randbereich der Trägerbahn 1 vollflächig aufgetragen ist.

Zudem ist bevorzugt, dass die erste Haftkleberschicht 2 in dem ersten Bahnbereich A mehrere Bahnabschnitte aufweist und die Bahnabschnitte eine unterschiedliche Klebkraft besitzen.

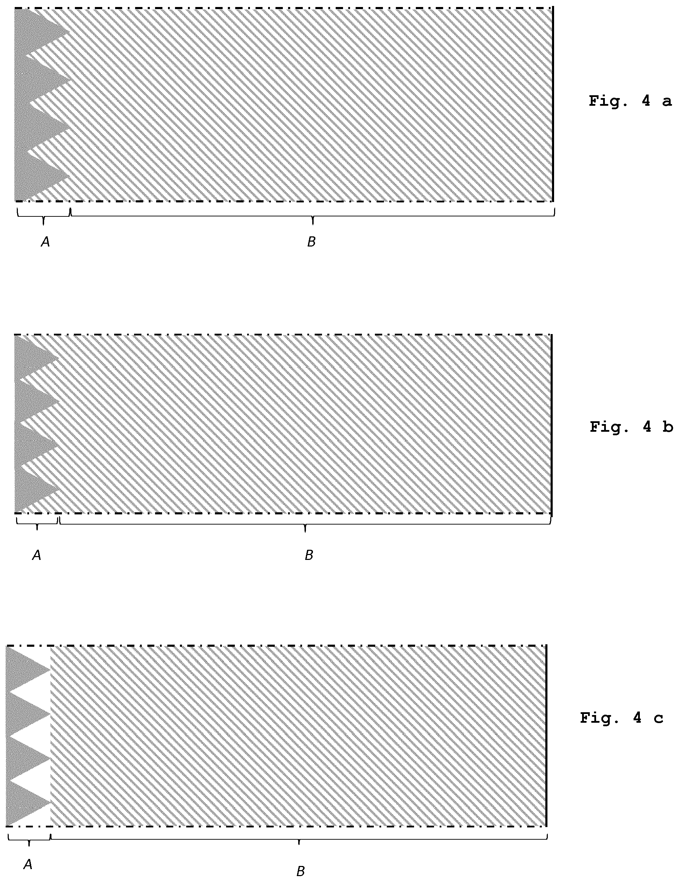

In einer bevorzugten Ausführungsform ist die erste Haftkleberschicht 2 im ersten Bahnbereich A so aufgebracht, dass die Klebkraft der ersten Haftkleberschicht 2 innerhalb des ersten Bahnbereichs A vom äußeren Rand der Trägerbahn 1 in Richtung des zweiten Bahnbereichs B abfällt. Dies ist vorteilhaft, weil beim Abziehen des erfindungsgemäßen Abdeckbands, was vorzugsweise beginnend mit dem zweiten Bahnbereich B erfolgt, beim darauf folgenden Abziehen des ersten Bahnbereichs A anfangs eine noch etwas geringere Haftkraft auf den Untergrund wirkt (was für ein schonendes und komfortables Entfernen vom Untergrund vorteilhaft ist) und diese Haftkraft dann, wenn das restliche Material der Trägerbahn 1 abgezogen wird, nur in einem äußeren Randbereich der Trägerbahn etwas höher ist. Dies ist schematisch in Fig. 4a bis Fig. 4f gezeigt.

### Haftklebestoffe

Auf erfindungsgemäßen Abdeckbändern können übliche Haftklebstoffe verwendet werden. Hinsichtlich Details von Haftklebstoffen, Klebmassenauswahl und Formulierung wird auf Satas & Assoc., "Handbook of Pressure Sensitive Adhesive Technology", 3rd Edition (1999) verwiesen.

Hinsichtlich der Klebkraft ist zu beachten, dass es bei der Nutzung von temporär angewendeten Selbstklebeprodukten beim Wiederablösen potentiell zur Beschädigung des Untergrunds kommen kann. Zum Entfernen des jeweiligen Produkts muss dessen Klebkraft auf dem Untergrund überwunden werden. Entsprechend wirkt dabei diese Kraft auch auf den Untergrund (näherungsweise im rechten Winkel zur Fläche, d.h. in z-Richtung zur Fläche). Wenn nun die Klebkraft höher ist als die innere Festigkeit des Untergrundes in z-Richtung, kann z.B. Lack- oder Farbmaterial vom Untergrund abreißen oder beispielsweise Papier delaminieren (Spalten in z-Richtung). Schwierig ist zudem, dass man vielen Untergründen ihre Empfindlichkeit oder ihre ausreichende innere Festigkeit nicht ansehen kann. Zudem hängt die innere Festigkeit des zu beklebenden Untergrunds auch von verschiedenen Randbedingungen ab (z.B. ist die Haftung einer Lackfläche auf dem Untergrund u.a. von der Untergrundfeuchte und von ausreichendem Anschliff des Untergrunds abhängig).

Verstärkt wird dieses Problem durch die prinzipielle Eigenschaft von im Klebebandbereich typischerweise verwendeten Haftklebern, dass ihre Klebkraft nach Applikation des Bandes auf dem Untergrund mit der Zeit zunimmt. Entsprechend können Selbstklebeprodukte, welche anfangs zerstörungsfrei wiederabzulösen sind, beim Entfernen nach längerer Verklebungszeit den Untergrund beschädigen.

Eine wirksame Möglichkeit, Beschädigungen beim Wiederablösen von mit Haftkleber beschichteten Produkten selbst von hochsensiblen Untergründen zu vermeiden, ist in der US 3 691 140 beschrieben, und zwar wird das beschriebene Problem der mit der Verklebungszeit zunehmenden Klebekräfte durch das Verwenden sogenannter Perlpolymerisat-Klebmassen gelöst, bei denen die Kleberschicht aus haftklebrigen Mikrokugeln besteht. Diese Mikrokugeln besitzen eine Größe von ca. 10 bis 250 µm und sind damit erheblich größer als die emulgierten Polymerpartikel, die in herkömmlichen wasserbasierten Klebmassen (z. B. auf Basis von Polyacrylaten) eingesetzt werden. Bei der Verklebung tritt geometrisch bedingt nur ein kleiner Teil der jeweiligen Oberfläche der klebrigen Perlen mit dem Untergrund in Kontakt. Auch nach Andrücken und der damit zunächst bedingten größeren Kontaktfläche bewirken die kautschukelastischen Rückstellkräfte der Klebermikrokugeln eine Begrenzung des Oberflächenkontakts. Damit wird gleichzeitig der Effekt des stärkeren Einfließen, welcher bei herkömmlicher Haftklebmasse auftritt, limitiert, und zudem dafür gesorgt, dass beim Ablösen des Artikels vom Untergrund die entsprechenden Trennkräfte nicht flächig, sondern auf viele kleine Areale verteilt auf den Untergrund wirken.

Dem Fachmann sind weitere Methoden bekannt, um Haftklebestoffe untergrundschonend zu gestalten, z.B. entstehen durch Verwendung bestimmter Polymerstrukturen mit und ohne Verwendung von weichmacherartigen Additiven vorteilhafte Klebmassen, die "weicher" abgezogen werden können. Allerdings haben diese Weichmacher Nachteile, weil sie in den beklebten Untergrund wandern und damit zu Verfärbungen führen können. Das Grundprinzip von herkömmlichen Haftklebern ist allerdings, dass es sich um viskoelastische, eher weiche Stoffe handelt, die über die Zeit partiell in Untergrundstrukturen einfließen. Dadurch ergibt sich fast immer ein Ansteigen der Klebkraft. Außerdem gibt es den Ansatz, normale Haftkleber (d.h. ohne Mikroperlen) zu verwenden und den geometrischen Effekt der Mikrokugeln drucktechnisch zu erzeugen, indem z.B. per Siebdruck mikroskopisch kleine, annähernd kugelförmige Strukturen gedruckt werden (DE 33 46 100). Es ist zudem bekannt, dass es z.B. für Haftnotizzettel, welche z.B. häufig auf Papier und anderen sehr empfindlichen Untergründen angewendet werden, nahezu unumgänglich ist, Perlpolymerisat-Klebmassen einzusetzen, wenn keinerlei Untergrundbeschädigung akzeptabel ist.

Gemäß US 3 691 140 werden Perlpolymer-Klebmassen durch Suspensionspolymerisation von Alkylacrylat-Monomeren und ionischen Comomonomeren wie Natriummethacrylat im Beisein eines Emulgators erhalten. Auf der Lehre der US 3 691 140 aufbauend gibt es weitere Synthesemethoden (z. B. US 4 166 152, US 4 645 783, US 5 326 842, US 3 620 988), Polymere basierend auf anderen oder funktionellen Comonomeren (US 4 735 837, WO00/36041), Perlpolymer-Klebmassen basierend auf ballonartigen oder nur partiell hohlen Mikrokugeln (US 5 405 469, US 4 988 567), vernetzten Mikrokugeln (US 5 714 237, WO2009/041920, DE 3544882) sowie Formulierungen mit Additiven (US 3857731). Auf dieser Basis ist dem Fachmann bekannt, wie und in welchen Grenzen sich relevante Eigenschaften entsprechender Perlpolymer-Klebmassen (wie z.B. Klebkraft auf den jeweiligen Untergründen, Tack, Verankerungskraft, Scherfestigkeit) variieren lassen (vgl. auch DE 699 29 698).

Bei dem erfindungsgemäßen Abdeckband ist vorzugsweise die zweite Haftkleberschicht 3 in dem zweiten Bahnbereich B nicht vollflächig aufgetragen. Ein nicht vollflächiges Aufbringen von Haftklebestoff ist z.B. gemäß der Lehre der DE 253 897 möglich, vgl. auch DE 974 178, EP 0 091 800, DE-OS 2 641 358, DE 43 08 649, DE 20 2010 014 239 U, EP 1 367 608 und DE 33 46 100.

Erfindungsgemäße Abdeckbänder sind ferner vorzugsweise dadurch gekennzeichnet, dass der zweite Bahnbereich B breiter als der erste Bahnbereich A ist. Bevorzugte Maße für den zweiten Bahnbereich B sind eine Breite von 5 bis 125 cm, vorzugsweise 7,5 bis 60 cm, insbesondere 10 bis 25 cm.

Die Angaben für die Breite des ersten Bahnbereichs A und des zweiten Bahnbereichs B beziehen sich auf den Bereich, der für den Kontakt mit dem Untergrund zur Verfügung steht, auf den das erfindungsgemäße Abdeckband aufgebracht wird.

Bevorzugt weist das erfindungsgemäße Abdeckband auf der Seite, die der klebenden Beschichtung 2, 3 gegenüber liegt, eine haftungsvermindernde Oberfläche auf, damit das in einer Rollenform gewickelte Abdeckband ausreichend leicht abgerollt werden kann. Geeignete haftungsvermindernde Beschichtungen, d.h. solche, die einen sogenannten Release-Effekt gegenüber üblichen Klebmassen aufweisen, inklusive ihrer Eigenschaftsanpassung durch Formulierung, sind dem Fachmann bekannt und werden entsprechend der verwendeten Klebmasse gewählt.

Das erfindungsgemäße Abdeckband weist also zumindest zwei Bahnbereiche A, B auf, wobei der erste Bahnbereich A eine bevorzugte Breite quer zur Laufrichtung von 2 bis 50 mm aufweist, vorzugsweise 4 bis 30 mm, insbesondere 8 bis 25 mm. Ferner ist in allen Ausführungsformen der Erfindung bevorzugt, dass die Klebkraft des Haftklebstoffs 2 im ersten Bahnbereich A typischerweise 0,7 bis 4,5 N/cm (auf Edelstahl, nach PSTC-101) beträgt, bevorzugter 1,0 bis 3,5 N/m. Dabei ist die chemische Basis der verwendeten Klebmasse für den ersten Bahnbereich A nicht eingeschränkt, außer in Bezug auf die resultierenden Klebekräfte und die Bedingung, dass die Klebkraft nach Anbringen auf dem entsprechenden Untergrund bedingt durch Anwendungszeit und Klimabedingungen nicht weiter als bis max. 5 N/cm (auf Edelstahl, nach PSTC-101) ansteigt. Es können z.B. Klebmassen auf Basis von Naturkautschuk, auf Basis von Polyacrylaten, von synthetischen Kautschuken (z.B. Polyisobutylen, Styrol-Butadien-Styrol-Blockcopolymeren, Styrol-Ethylen-Butylen-Styrol-Blockcopolymeren), Polyurethanen, Polyolefinen, Silikonkautschuken, sowie deren Abmischungen eingesetzt werden, wobei gegebenenfalls mit entsprechenden Füllstoffen, Klebharzen oder Weichmachern oder deren Kombinationen additiviert wird. Auch der Einsatz von Vernetzern und/oder Bestrahlung mit vernetzender Wirkung zur gezielten Anpassung der Klebmasseeigenschaft ist möglich.

Das erfindungsgemäße Abdeckband weist im Bereich des (vorzugsweise breiteren) zweiten Bahnbereichs B eine geringere Haftklebrigkeit auf. Der in dem zweiten Bahnbereich B verwendete Haftkleber ist ebenfalls nicht limitiert auf einen bestimmten Typ Basiselastomer. Allerdings beträgt die Klebkraft des Materials in diesem Bereich B bevorzugt 0,1 bis 0,9 N/cm (auf Edelstahl, nach PSTC-101). Besonders bevorzugt eignen sich in dem zweiten Bahnbereich B Haftkleber auf Basis von Perlpolymerisaten von Acrylaten, da sich damit Haftkleberschichten herstellen lassen, die beim Entfernen besonders untergrundschonend sind. Mit allen herkömmlichen Haftklebmassesystemen können bei Anwendung von dem Fachmann geläufigem Rezeptur-Know-How leicht klebende und damit untergrundschonende Beschichtungen erzeugt werden. Das Verhältnis aus maximal erzielbarer Klebkraft und Untergrundschonung ist jedoch beim Perlpolymerisat-Typ besonders vorteilhaft.

Die höhere Klebkraft im ersten Bahnbereich A der erfindungsgemäßen Abdeckbahn kann dabei erzeugt werden durch 1) verschiedene Klebmasserezepturen im ersten Bahnbereich und im zweiten Bahnbereich, oder durch 2) verschieden dick aufgetragene Klebmasse eines Typs. Weiterhin ist es möglich, die unterschiedliche Klebkraft durch 3) unterschiedlich vollständige Klebmassebeschichtung der Bahnbereiche A, B zu erzeugen. So kann ein geschlossener Streifen Klebmasse am Rand der Abdeckbahn in der Fläche ergänzt werden durch lediglich in schmalen Streifen, Wellen oder in Punkten oder diversen anderen geometrischen Formen aufgetragene Klebmasse, welche dabei nur Teile der Oberfläche des Trägermaterials bedeckt.

Beispielsweise ist ein vollständig geschlossener Klebmasseauftrag im stärker klebenden ersten Bahnbereich und ein Linien-, Punkt- oder Schraffur-förmiger (o.ä.) Klebmasseauftrag im bewusst weniger klebstarken zweiten Bahnbereich B des erfindungsgemäßen Abdeckbands möglich. Auch ein gradueller Klebkraftabfall quer zur Laufrichtung, und zwar von der Trägerbahnkante über den ersten Bahnbereich A zum zweiten Bahnbereich B (z.B. erzeugt durch eine entsprechende Variation offener Auftragsstrukturen) eignet sich für das erfindungsgemäße Abdeckband. Bei der Ausgestaltung des Klebmasseauftrags sind entsprechende Grenzen lediglich gesetzt durch 1) die Notwendigkeit, im zweiten Bahnbereich B ausreichend schonende Klebkraft zu bewirken und 2) die Notwendigkeit, im ersten Bahnbereich A für den Randschluss gegen eindringendes Beschichtungsmaterial ausreichend hohe Klebkraft zu erzielen.

Zudem ist bei erfindungsgemäßen Abdeckbändern bevorzugt, dass mindestens eine der zwei Haftkleberschichten (2, 22, 32; 3, 23, 33) ein Perlpolymerisat umfasst, wobei vorzugsweise beide Haftkleberschichten (2, 22, 32; 3, 23, 33) ein Perlpolymerisat umfassen. Ferner ist bevorzugt, dass die Haftkleberschicht (2, 22, 32) in dem zweiten Bahnbereich (B) ein Perlpolymerisat umfasst.

In einer ersten allgemeinen und bevorzugten Ausführungsform ist das erfindungsgemäße Abdeckband dadurch gekennzeichnet, dass die Trägerbahn aus einem Material besteht, das im ersten Bahnbereich A die erste Haftkleberschicht 2 und im zweiten Bahnbereich B die zweite Haftkleberschicht 3 trägt. Diese Ausführungsform ist in Fig. 1 gezeigt und ist deshalb von Vorteil, weil lediglich ein einziges Trägermaterial verwendet wird und ein Zusammenfügen von zwei Bahnen nicht notwendig ist.

Als Trägermaterial wird bei allen Ausführungsformen wegen der guten Handeinreißbarkeit bevorzugt ein Material basierend auf Papier verwendet. Es können allerdings auch andere dem Fachmann für den Einsatz als Träger bekannten Materialien (wie Folien, insbesondere auch handeinreißbare Folien, Folienlaminate, Gewebe oder Vliese oder deren Kombinationen) genutzt werden. Bei der Beschreibung von Materialien wie Papier ist klar, dass das Material (wie Papier) Funktionsschichten o.ä. einschließen oder aufweisen und aus mehreren einzelnen Schichten bestehen kann.

In einer zweiten allgemeinen und bevorzugten Ausführungsform ist das erfindungsgemäße Abdeckband dadurch gekennzeichnet, dass die Trägerbahn mindestens zwei Materialien umfasst, wobei das erste Material 21a, 31a in dem ersten Bahnbereich A die erste Haftkleberschicht 22, 32 trägt und das zweite Material 21b, 31b in dem zweiten Bahnbereich B die zweite Haftkleberschicht 23, 33 trägt. Diese Ausführungsform ist in Fig. 2, Fig. 3a und Fig. 3b sowie Fig. 5 bis Fig. 9 gezeigt. Durch geeignete Wahl des ersten Materials 21a, 31a und des zweiten Materials 21b, 31b kann beispielsweise sichergestellt werden, dass die jeweiligen Materialien die für die speziellen Zwecke besten Eigenschaften besitzen. Beispielsweise kann das erste Material 21a, 31a ein beschichtetes Gewebe oder eine Folie sein oder eine Folie einschließen, wodurch das erfindungsgemäße Abdeckband im ersten Bahnbereich A in Bezug auf das eingesetzte Beschichtungsmaterial besonders robust und farbdurchschlagfest ist. Demgegenüber kann das zweite Material 21b, 31b ein leichtes Papier sein, was für die Aufnahme von Sprühnebel aus Beschichtungsmaterial ausreichen kann.

In dieser zweiten Ausführungsform kann in einer ersten bevorzugten Version das erste Material 21a auf der Seite, welche die erste Haftkleberschicht 22 trägt, in einem dritten Bahnbereich C einen Klebstoff tragen. Das zweite Material trägt auf seiner ersten Seite die zweite Haftkleberschicht 23 und liegt auf seiner zweiten Seite auf dem Klebstoff des dritten Bahnbereichs C auf. Diese Version ist in Fig. 2 gezeigt und hat den Vorteil, dass nicht, wie in Fig. 3a und 3b gezeigt, ein zusätzliches Klebeband eingesetzt werden muss. Diese Ausführungsform ist ferner vorteilhaft, weil es einfacher ist, eine Klebmasse auf einen Träger aufzubringen und dann zwei Bahnen zu kombinieren, als zwei verschiedene Klebmassen in einem oder in zwei Schritten auf eine Bahn aufzubringen. Der Überlappungsbereich zwischen dem ersten Material 21a und dem zweiten Material 21b, also der dritte Bahnbereich C, wird vorzugsweise schmaler gewählt als die Breite des ersten Bahnbereichs und des zweiten Bahnbereichs, was Material spart und beim Aufrollen des erfindungsgemäßen Abdeckbands vorteilhaft ist. In der Praxis sind das meistens wenige mm, typischerweise 3-12 mm. Die geeignete Überlappungsbreite hängt auch von der Steifigkeit des zweiten Materials 21b ab. Wenn das zweite Material 21b dicker ist, wird etwas mehr Verklebungsfläche benötigt, um einen sicheren Halt der Verbindung der beiden Bahnen beim Abrollen, Anbringen und Wiederablösen sicherzustellen. Der dritte Bahnbereich C verbindet also bei der in Fig. 2 gezeigten Ausführungsform das erste Material 21a mit dem zweiten Material 21b, und der Haftkleber 22 auf Material 21a im dritten Bahnbereich C kommt nicht in Kontakt mit dem Untergrund, auf den das erfindungsgemäße Abdeckband aufgebracht wird.

Bei dieser Ausführungsform ist vorzugsweise der Klebstoff, der in dem dritten Bahnbereich C des ersten Materials 21a aufgebracht ist und das erste Material 21a mit dem zweiten Material 21b verbindet, der in dem ersten Bahnbereich A aufgebrachte Haftklebstoff, wie es in Figur 2 gezeigt ist.

In der zweiten Ausführungsform kann das erfindungsgemäße Abdeckband in einer alternativen Version auf der zweiten Seite der Trägerbahn aus erstem und zweiten Material, 31a, 31b, ein Klebeband mit Kleberschicht 34, 35 aufgebracht aufweisen, wobei das Klebeband mit Kleberschicht das erste Material 31a mit dem zweiten Material 31b verbindet (Fig. 3a, 3b). Diese Version ist vorteilhaft, weil das Klebeband 34, 35 eine sehr hohe Klebkraft besitzen kann und auf dem ersten Material 31a und dem zweiten Material 31b stark haftet. Das Klebeband kann also auch einen sehr starken Kleber 35 aufweisen, der zudem kein den Untergrund schonender Haftkleber sein muss, weshalb ein dünnes Klebeband mit geringer Breite gewählt werden kann, was wiederum beim Aufrollen des erfindungsgemäßen Abdeckbands Vorteile bietet.

Bei dieser Version der zweiten Ausführungsform ist es bevorzugt, dass das Klebeband 34, 35 auf der zweiten Seite der Trägerbahn den ersten Bahnbereich A und den zweiten Bahnbereich B jeweils nur zum Teil bedeckt (Fig. 3a).

Alternativ ist bevorzugt, dass das Klebeband auf der zweiten Seite der Trägerbahn aus dem ersten Material 31a und dem zweiten Material 31b den ersten Bahnbereich A vollständig und den zweiten Bahnbereich B nur zum Teil bedeckt (Fig. 3b). Beispielsweise kann das Klebeband eine Folie einschließen und dadurch den ersten Bahnbereich A sehr gut vor einem unerwünschten Durchschlag von Beschichtungsmaterial schützen. Der zweite Bahnbereich B wird ebenfalls zum Teil durch das Klebeband 34, 35 vor Durchschlag geschützt, und zwar in dem Überlappungsbereich zwischen Klebeband 34, 35 und zweitem Bahnbereich B, der noch am meisten mit Beschichtungsmaterial in Kontakt kommen kann.

Zudem ist es bei der Ausführungsform der Fig. 3a und 3b sowie Fig. 5 und Fig. 6 bevorzugt, dass das erste Material 31a und das zweite Material 31b etwas voneinander beabstandet sind (nicht in den Figuren gezeigt). Dies ist vorteilhaft, weil man beim Zusammenfahren von erstem Material 31a und zweitem Material 31b bei der Herstellung nicht so präzise sein muss. Beim direkten Kontakt des ersten Materials 31a und des zweiten Materials 31b wäre es demgegenüber nachteilig, wenn die Materialbahnen 31a, 31b versehentlich überlappen würden, da dann partiell Dickstellen entstehen können. Wenn jedoch ein gewisser Abstand vorgesehen ist, dann sind auch leichte Schwankungen der Materialbahnführung möglich, ohne dass das Risiko von Dickstellen entsteht. In dieser Ausführungsform muss, um Untergrundschäden in der Anwendung durch den (starken) Haftklebstoff 35 zu vermeiden, darauf geachtet werden, dass der maximale Abstand von 31a und 31b so klein ist, dass in der Anwendung kein Kontakt des (starken) Haftklebstoffs 35 mit dem Untergrund eintritt. Falls dies nicht möglich ist, kann auch ein Absenken der Klebkraft des Haftklebstoffs 35 im Bereich der Fuge zwischen 31a und 31b (z.B. durch Bepuderung des Materials mit Glasmehl o.ä.) während des Konfektionierens späteren Schäden vorbeugen. Alternativ kann es auch vorteilhaft sein, für 35 einen Strukturkleber zu verwenden, der nach Verbinden der beiden Materialbahnen 31a, 31b aushärtet, weshalb keine Klebrigkeit in dem Abstandsbereich verbleibt.

Im Folgenden werden Ausführungsformen der Erfindung unter Bezugnahme auf die Zeichnungen näher erläutert. Es zeigen:
**Fig. 1** einen Querschnitt des erfindungsgemäßen Abdeckbands nach dem Produktaufbauprinzip a) in Laufrichtung der Bahn,
**Fig. 2** einen Querschnitt des erfindungsgemäßen Abdeckbands nach dem Produktaufbauprinzip b) in Laufrichtung der Bahn,
**Fig. 3** **a** und **Fig. 3b** Querschnitte des erfindungsgemäßen Abdeckbands nach dem Produktaufbauprinzip c) in Laufrichtung der Bahn,
**Fig. 4a** bis **Fig. 4f** Draufsichten auf ein erfindungsgemäßes Abdeckband, und zwar auf diejenige Seite, welche die Haftkleberschichten trägt, d.h. in Bezug auf die in Fig. 1, 2 und 3a, 3b gezeigten Querschnitte von unten,

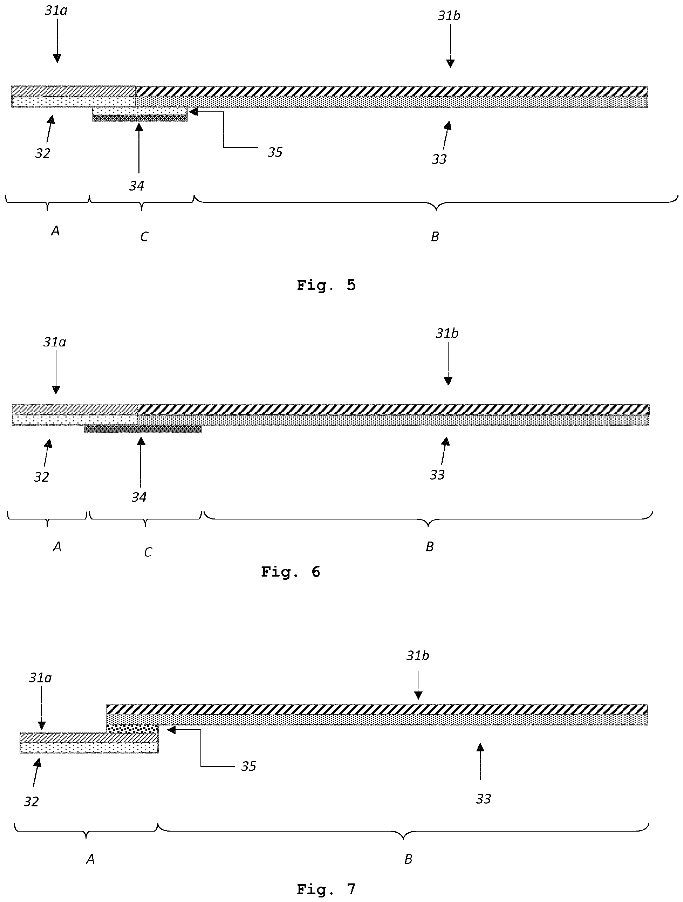

**Fig. 5** einen Querschnitt des erfindungsgemäßen Abdeckbands nach einem dem Produktaufbauprinzip c) alternativen Prinzip, in Laufrichtung der Bahn,
**Fig. 6** einen Querschnitt des erfindungsgemäßen Abdeckbands, in Laufrichtung der Bahn und in einem Produktaufbauprinzip, das dem von Fig. 5 angelehnt ist,
**Fig.7** einen Querschnitt des erfindungsgemäßen Abdeckbands, nach einem Produktaufbauprinzip, das dem von Fig. 2 ähnelt, in Laufrichtung der Bahn,

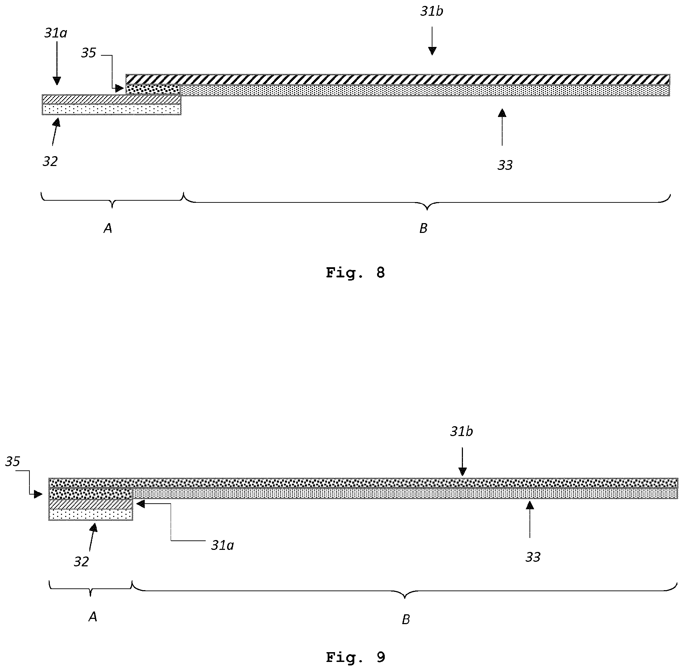

**Fig. 8** einen Querschnitt des erfindungsgemäßen Abdeckbands nach einem Produktaufbauprinzip, das dem von Fig. 7 angelehnt ist, in Laufrichtung der Bahn, und
**Fig. 9** einen Querschnitt des erfindungsgemäßen Abdeckbands nach einem weiteren Produktaufbauprinzip, in Laufrichtung der Bahn.

### Produktaufbauprinzip a)

In der in Fig. 1 gezeigten Ausführungsform besteht die Trägerbahn aus einem einzigen Material 1 und stellt das flächige Trägermaterial dar. 2 bezeichnet die stärker klebende Haftkleberschicht im ersten Bahnbereich A des erfindungsgemäßen Abdeckbands, während 3 die geringer klebende Haftkleberschicht im zweiten Bahnbereich B kennzeichnet. Das erfindungsgemäße Abdeckband wird derart am jeweiligen Untergrund angebracht, dass der spätere Farb- oder Lackauftrag im Bereich der Kante mit dem stärker klebenden Haftkleber erfolgt, also der Außenkante von 1 im ersten Bahnbereich A. Der Übersicht halber sind in Fig. 1 lediglich zwei verschieden stark klebende Bereiche A, B dargestellt. Weiterhin anzumerken ist, dass das erwähnte flächige Trägermaterial genau wie auch die entsprechenden, in den weiteren Produktaufbauprinzipien genannten Trägermaterialien neben den Basisträgermaterial (z.B. Papier oder Folie oder Gewebe) weitere Funktionsschichten enthalten können. Der Übersichtlichkeit halber sind z.B. die entsprechenden Schichten eines Primers zwischen Kleberschicht und Träger, eines Primers oder sogenannten Topcoats zwischen Träger und Trennlackierung (Release-Coat) sowie die zuvor genannte Trennlackierung auf der Trägeroberseite als auch im Träger befindliche Imprägnier- oder Hydrophobierschichten jeweils in den Zeichnungen nicht dargestellt.

### Produktaufbauprinzip b)

Die in Fig. 2 gezeigte Ausführungsform des erfindungsgemäßen Abdeckbands umfasst ein erstes Trägermaterial 21a der Trägerbahn und eine Haftkleberschicht 22 im ersten Bahnbereich A und im dritten Bahnbereich C.

Das erste Material 21a der Trägerbahn und die Kleberschicht im ersten Bahnbereich A und im dritten Bahnbereich C sind in der Art der zuvor erläuterten 2-in-1-Abdecklösungen so auf dem zweiten Material 21b der Trägerbahn befestigt, dass ein erster Bahnbereich 22 der Kleberschicht zur späteren Befestigung auf dem Untergrund verbleibt.

Als erstes Material 21a der Trägerbahn und Haftkleberschicht 22 im ersten und dritten Bahnbereich A, C ist im Prinzip jedes Abklebeband geeignet, welches nach der gewünschten Anwendungsdauer und den typischerweise bei Renovier- und Anstricharbeiten herrschenden Bedingungen rückstands-, untergrundbeschädigungs- und delaminationsfrei abgezogen werden kann und gleichzeitig eine ausreichend präzise Farb- oder Lackkante erzeugt. Bevorzugt lassen sich Abdeckbänder auf Basis von imprägnierten Trägerpapieren einsetzen, welche mit Klebmassen auf Naturkautschukbasis oder auch auf Basis von Acrylatklebmassen hergestellt sind. Besonders bevorzugt eignen sich Abdeckbänder auf Basis von Washi-Papieren (Japanpapier). Diese Produkte ermöglichen zum einen besonders präzise Farb- und Lackkanten und ergeben zum anderen auch mit relativ geringen Klebekräften von etwa 1 bis 2,5 N/cm (auf Edelstahl, nach PSTC-101) sehr gute Abdichtung bei gleichzeitig geringem Risiko von Untergrundbeschädigung.

Geeignete kommerziell verfügbare Produkte diesen Typs, die als erstes Material 21a der Trägerbahn und Kleberschicht 22 im ersten und dritten Bandbereich A, C eingesetzt werden können, sind z.B. tesa^{®} Präzisionskrepp 4334, KIP 308, 3M™ Scotch 244 und Storch^{®} 4931.

In Fig. 2 ist gezeigt, dass bei dieser erfindungsgemäßen Ausführungsform das zuvor erläuterte Abdeckband bekannten Typs (erstes Material 21a der Trägerbahn und Kleberschicht 22 im ersten und dritten Bandbereich A, C) zum Teil auf einem flächigen Abdeckmaterial aufliegt, also auf dem zweiten Material 21b der Trägerbahn, das auf der anderen Seite mit einer im Vergleich zu der Haftkleberschicht 22 im ersten und dritten Bahnbereich schwächer klebenden Haftkleberschicht 23 beschichtet ist. Als flächiges Abdeckmaterial, beinhaltend zweites Material 21b der Trägerbahn und im Vergleich zu 22 schwächer haftklebriger Beschichtung 23, eignen sich erfindungsgemäß genau jene Trägermaterialien und Beschichtungen, wie sie in Bezug auf die erste Ausführungsform a) beschrieben sind, also in Bezug auf Trägerbahn aus einem Material 1 und zweite Haftkleberschicht 3 im zweiten Bahnbereich B.

### Produktaufbauprinzip c)

In Abwandlung des Produktaufbauprinzip b) lässt sich als weitere Alternative ein erfindungsgemäßes Abdeckband auch derart erzeugen, dass ein herkömmliches Abklebeband, bestehend zumindest aus Trägermaterial 31a und Haftkleberschicht 32 mit einem schwächer klebenden Abdeckmaterial, zumindest bestehend aus Trägermaterial 31b und Haftkleberschicht 33 nicht überlappend, sondern nebeneinander liegend verbunden wird, indem ein Fixiermittel 34, 35 die beiden Materialien verknüpft. Dies ist in Fig. 3a und 3b dargestellt.

Zur Fixierung der beiden Teilgebilde 31a und 32; 31b und 33 kann prinzipiell jedes herkömmliche Klebeband verwendet werden, welches eine ausreichende Haftung auf den Rückseiten der zwei Materialien 31a, 31b aufweist. Dabei muss mindestens eine Haftung erreicht werden, die es ermöglicht, dass bei der eigentlichen Anwendung, beginnend mit dem Abrollen des üblicherweise als Rollenware erzeugten Endprodukts, das Fixiermittel auf den beiden Materialien 31a, 31b verbleibt. Das fixierende Band 34, 35 kann über der Kontaktlinie der beiden darunter liegenden Materialien 31a, 31b angebracht sein, oder aber über einer ebenfalls möglichen Fuge der beiden darunter liegenden Flächen (nicht in den Figuren gezeigt). Es kann dabei den stärker klebenden (typischerweise schmaleren) ersten Bahnbereich A nur zum Teil (Fig. 3a) oder auch vollständig (vgl. Fig. 3b) abdecken.

Die Fixierung der beiden Abdeckmaterialflächen 31a, 31b lässt sich auch durch ein streifenförmiges Material erreichen, das mittels Strukturkleber auf den darunter liegenden Flächen angebracht ist. Weiterhin ist es möglich, die Fixierung durch thermoplastische Materialien in der Art der Schmelzverklebung zu erreichen. Materialwahl und Aufbauprinzipien der beiden Abdeckmaterialien 31a, 31b, welche mittels Fixiermittel 34, 35 verbunden sind, entsprechen denen, welche in Bezug auf Produktaufbauprinzip b) für die entsprechenden Flächengebilde erwähnt wurden.

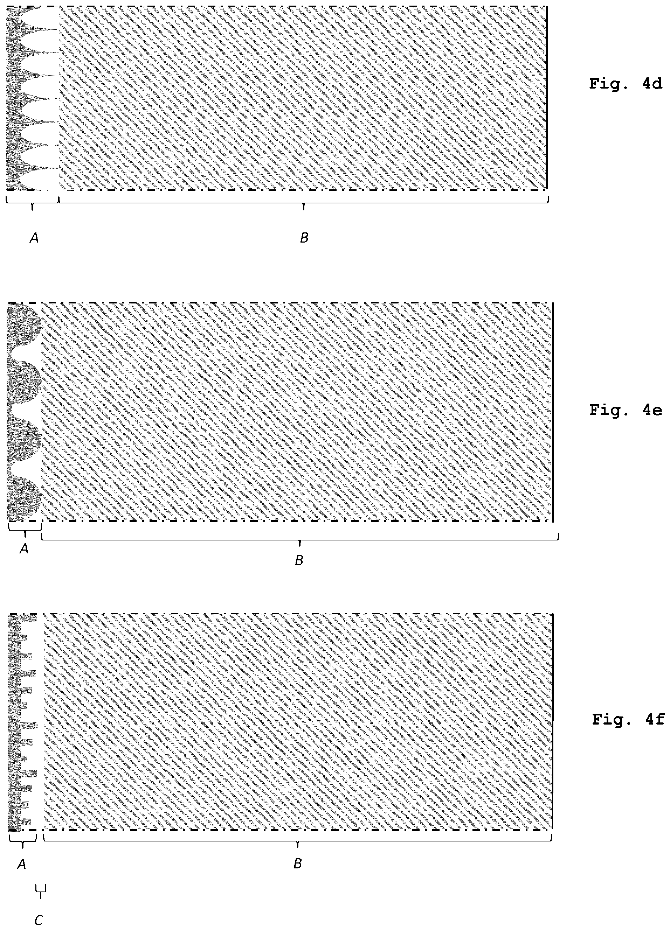

In Fig. 4a bis Fig. 4f ist gezeigt, dass die Klebkraft in dem ersten Bahnbereich A einen Gradienten aufweisen kann, indem der Haftklebstoff in dem ersten Bahnbereich A nicht vollflächig aufgebracht ist. Jedoch ist es in allen Ausführungsformen der Erfindung bevorzugt, dass der Haftklebstoff in dem ersten Bahnbereich A jedenfalls im äußeren Randbereich der Trägerbahn 1 ohne Unterbrechungen (durchgehend) aufgebracht ist, was in dem ersten Bahnbereich A am Rand eine gute Haftung am Untergrund sicherstellt und ein Hinterlaufen mit Beschichtungsmaterial sicher verhindert. Dieser durchgehende Randbereich des ersten Bahnbereichs kann etwas breiter ausgeführt sein, wie in Fig. 4a, Fig. 4d und Fig. 4f gezeigt ist, oder er kann vergleichsweise schmal ausgeführt sein, wie in Fig. 4b, Fig. 4c und Fig. 4e gezeigt ist.

Es ist außerdem erfindungsgemäß möglich, dass die Klebkraft in dem zweiten Bahnbereich B einen Gradienten aufweist, wobei die Klebkraft in dem äußeren (von dem ersten Bahnbereich A abgewandten) Teil des Bahnbereichs B vorzugsweise nicht Null ist, sondern dort typischerweise mindestens 0,1 N/cm (auf Edelstahl, nach PSTC-101) beträgt. Zudem ist es möglich, dass die Klebkraft über beide Bahnbereiche einen Gradienten aufweist (also abfällt, beginnend mit dem äußeren Randbereich des Bahnbereichs A bis zu dem äußeren (von dem ersten Bahnbereich A abgewandten) Teil des Bahnbereichs B). Jedoch liegt bei dem erfindungsgemäßen Abdeckband in den oben genannten typischen Breiten für die Bahnbereiche A und B die Klebkraft in den angegebenen typischen Bereichen, und die Klebkraft in dem ersten Bahnbereich A ist stärker als die Klebkraft in dem zweiten Bahnbereich B. Optional ist in dieser Ausführungsform ein nicht beschichteter, äußerer Bahnbereich D vorhanden.

In Fig. 4a bis Fig. 4e ist gezeigt, dass der erste Bahnbereich A mit der höheren Klebkraft und der zweite Bahnbereich B mit der geringeren Klebkraft direkt aneinander angrenzen können. In Fig. 4f ist demgegenüber gezeigt, dass sich zwischen dem ersten Bahnbereich A und dem zweiten Bahnbereich B ein dritter Bahnbereich C befinden kann, der in der in Fig. 4f gezeigten Ausführungsform nicht mit Haftklebstoff beschichtet ist.

In Fig. 5 ist eine Abwandlung des in Fig 3a. gezeigten Produktaufbaus gezeigt. Mit dieser Ausführungsform lässt sich eine Verbindung von Bahnbereich A und Bahnbereich B erreichen, indem ein Klebeband 34, 35 mit der klebenden Fläche 35 auf die Seite aufgebracht wird, auf welche die haftklebenden Beschichtungen von Bahnbereich A und Bahnbereich B aufgetragen sind. Vorzugsweise handelt es sich um ein ausreichend stark klebendes Band 34, 35, welches auf den beiden Kleberflächen 32, 33 deutlich stärker haftet als die Bahnbereiche A, B auf den üblichen Untergründen, welche für das erfindungsgemäße Abdeckband in Frage kommen. Dies ist notwendig, weil ansonsten die Gefahr besteht, dass beim Abrollen des Produkts von der Rolle oder nach Anwendung vom Untergrund sich die Verbindung der Bahnbereich löst.

Ebenso kann ein die Bahnbereiche verbindendes Klebeband 34, 35 derart angebracht sein, dass es direkt auf den (jeweils in diesem Bereich nicht mit Haftkleber beschichteten) Materialien 31a, 31b fixiert wird. Dies würde im Vergleich zum zuvor beschriebenen Konzept Klebmasse einsparen und auch erübrigen, dass die Klebmasse 35 des verbindenden Klebebands 34, 35 mit den Haftklebern 32, 33 abgestimmt werden muss.

In Fig. 6 ist ein besonders elegantes und einfaches Prinzip gezeigt, zwei Klebebandstreifen zu einem Produktaufbau zu verbinden. Dieses Prinzip beinhaltet mindestens zwei unterschiedlich stark klebende Haftkleberschichten 32, 33 und darauf einen nichtklebenden Materialstreifen 34 (d.h. ohne Klebstoff 35). So haften nahezu alle Haftkleber typischerweise auf mikrorauen Oberflächen, wie z.B. auf geätzten Folien (Beispiel: Trichloressigsäure-behandelte Polyesterfolie), erheblich stärker als auf üblichen Untergründen. Daher erhält man ein erfindungsgemäßes Abdeckband auch, wenn in einfacher Weise ein entsprechender Materialstreifen 34, auf dem besonders hohe Haftung mit Haftklebmassen erzielt wird (z.B. Polyesterstreifen mindestens einseitig geätzt), auf die Haftkleberschichten 32, 33 laminiert wird. Zur Optimierung eines robusten Verbundes der beiden Schichten 32, 33 ist es vorteilhaft, dabei die entsprechenden Verklebungsflächen auf den beiden Bahnbereichen entsprechend den jeweiligen Klebekräften zu wählen. Dies würde bedeuten, dass der Streifen zu einem größeren Teil auf der leichtklebenden Bahn als auf der stärker klebenden Bahn angebracht sein würde.

Es ist also bevorzugt, dass auf der ersten Seite der zwei Materialien 31a, 31b der Trägerbahn auf der ersten Haftkleberschicht 32 ein Klebeband 34 aufgebracht ist, wobei das Klebeband 34 das erste Material 31a mit dem zweiten Material 31b im dritten Bahnbereich C verbindet (Fig. 5, Fig. 6), wobei vorzugsweise eine Kleberschicht 35 auf dem Klebeband 34 aufgebracht ist und die Kleberschicht 35 auf der ersten Haftkleberschicht 32 und der zweiten Haftkleberschicht 33 aufliegt (Fig. 5).

Alternativ zu dem in Fig. 2 gezeigten Produktaufbau lässt sich das erfindungsgemäße Klebeband auch derart konstruieren, dass der stärker klebende Bahnbereich A nicht im Randbereich auf den leichter klebenden Bahnbereich aufgebracht wird, sondern sich in Umkehrung unterhalb der leichter klebenden Bahn befindet (vgl. Fig. 7). Üblicherweise wird der leichter klebende Klebstoff 33 nur gering auf dem Bahnbereich 31b haften, was das Risiko der Bahnentrennung bei Abrollen oder nach Anwendung ergibt. Insofern wird ein taugliches Produkt bevorzugt hergestellt, indem die verbindende Verklebung durch eine zusätzliche weitere Haftkleberschicht 35 erfolgt.

Somit ist bevorzugt, dass das zweite Material 31b auf seiner ersten Seite die zweite Haftkleberschicht 33 trägt, und die zweite Haftkleberschicht 33 in einem Teilbereich eine Kleberschicht 35 trägt, die auf der zweiten Seite des ersten Materials 31a aufliegt, wobei das erste Material auf der ersten Seite in dem ersten Bahnbereich A die erste Haftkleberschicht 32 trägt (Fig. 7).

Praktischerweise ließe sich auch ein Produkt herstellen, indem der leichter klebende Klebstoff 33 auf das Material 31a aufgebracht wird, welche aus einem doppelseitigen Klebeband 31a, 32, 35 besteht, welches auf der Oberseite nur in einem Randbereich mit Klebmasse 35 beschichtet ist. Ebenso könnte die leichter klebende Klebmasse 33 im Randbereich von Material 31b nicht aufgetragen sein und gerade diesen Randbereich zur Fixierung mit Haft- oder Strukturkleber 35 mit dem Material 31a nutzen. Der entsprechende Produktaufbau ist in Fig. 8 gezeigt.

Somit ist auch bevorzugt, dass das zweite Material 31b auf seiner ersten Seite in dem zweiten Bahnbereich B die zweite Haftkleberschicht 33 trägt, das zweite Material 31b auf seiner ersten Seite eine Kleberschicht 35 trägt und die Kleberschicht 35 die zweite Seite des ersten Materials 31a und die erste Seite des zweiten Material 31b verbindet, wobei das erste Material auf der ersten Seite in dem ersten Bahnbereich A die erste Haftkleberschicht 32 trägt (Fig. 8, Fig. 9). Es ist dabei bevorzugt, dass die Kleberschicht (35) die gesamte zweite Seite des ersten Materials (31a) bedeckt und mit dem zweiten Material (31b) verbindet (Fig. 9).

Ein weiterer tauglicher Produktaufbau für das erfindungsgemäße Klebeband ist also in Fig. 9 dargestellt und stellt eine Abwandlung von Fig. 1 dar. Ein Produktaufbau wie in Fig. 1 lässt sich im einfachsten Falle erzeugen, indem das Trägermaterial 1 derart mit Haftkleber 3 beschichtet wird, dass ein (schmaler) Randbereich A zunächst frei bleibt. Auf diesen Randbereich A wird anschließend die stärker klebende Haftkleberschicht 2 aufgetragen. Dies kann durch direkte Beschichtung oder durch Aufkaschieren einer trockenen (z.B. eines Transferklebebands) oder angetrockneten Haftkleberschicht erreicht werden. Alternativ kann auf den zunächst unbeschichteten Randbereich A ein doppelseitiges Klebeband (Fig. 9: 35, 31a, 32) laminiert werden, welches eine Klebmassenschicht 32 aufweist welche stärker klebt als die Haftkleberschicht 33.

Der Produktaufbau Fig. 9 ist besonders vorteilhaft, da die Herstellweise deutlich einfacher ist als ein Auftragen von zwei Klebmassenspuren in einem Schritt (wie für Fig. 1) und gleichzeitige breite Auswahlmöglichkeiten für geeignete Klebmassen bestehen, da die Klebmasse 32 unabhängig von Klebmasse 35 gewählt werden kann. Das heißt, es kann durch Verwenden einer sehr stark klebenden Haftkleberschicht 35 ein starker Verbund der Haftkleberschicht zum Träger 1 erreicht werden, während gleichzeitig für 32 eine nur mittelstark klebende und damit eher untergrundschonende Klebmasse ausgewählt werden kann.

### Prüfmethoden

### Klebkraft

Die Prüfung der Klebkraft (Schälfestigkeit) erfolgt nach PSTC-101 (TEST METHOD A - Single-Coated Tapes at 180° Angle). Von dem zu prüfenden Klebeband werden Streifen von 24 mm Breite und 300 mm Länge zugeschnitten und mit der Haftklebstoffseite auf Edelstahlplatten durch zweimaliges Überrollen in jede der beiden Längsrichtungen mit einer 2 kg schweren, gummierten Stahlrolle verklebt. Die verwendeten Edelstahlplatten weisen ein Format von 50 x 125 mm auf und bestehen aus Edelstahl der Qualität ASTM 304 mit blankgeglühter Oberfläche.

Die jeweilige beklebte Platte wird innerhalb einer Zugprüfmaschine eingespannt und der Klebebandstreifen über sein freies Ende unter einem Schälwinkel von 180° mit einer konstanten Geschwindigkeit von 300 mm/min abgezogen. Die dabei aufgenommene Kraft wird gemittelt und in N/cm angegeben. Als Ergebnis wird der Durchschnittswert von 5 Einzelmessungen angegeben.

Grammatur (Flächenmasse) nach DIN EN ISO 536.

Dicke nach DIN EN ISO 534 mit 20 N Auflagedruck und einer Messfläche von 200 mm².

Die Vorteile der Erfindung ergeben sich insbesondere aus den folgenden Beispielen.

### Beispiele

### Beispiel 1

Auf ein Kraftpapier mit der Grammatur von 50 g/m² (Advantage MG Kraft der Fa. Mondi, Addlestone, Surrey, Vereinigtes Königreich), wurden auf die glattere der beiden Papierseiten mittels einer Drahtrakelbeschichtung ca. 2 g/m² (bezogen auf Trockenmasse) der Dispersion Resem P677 (Chukyo Yushi, Aichi, Japan) aufgetragen, um eine hydrophobe und Trennkraft bewirkende Beschichtung zu erhalten.

Auf der gegenüberliegenden Trägerseite werden zur Verbesserung der späteren Verankerung der Klebmasse vollflächig 1,5 g/m² eines wasserbasierten Primers (MT2 von ichemco, Cuggiono, Italien) aufgetragen.

Nach jeweiliger Trocknung der Funktionsschichten bei 150°C für ca. 1 min im Trockenkanal einer Laborbeschichtungsanlage wird in Laufrichtung des Trägers auf die Seite mit dem Primerauftrag randbündig ein 8 mm breiter Streifen mit einem Haftklebstoffauftrag von ca. 27 g/m² der polyacrylatbasierten Klebmasse (Acrilem PS 34-468, Icapsira, Parabiago, Italien) aufgetragen.

Die übrige Trägerfläche, d.h. der verbleibende, mit Primer beschichtete Bereich, wird mit ca. 10 g/m² eines Haftklebers beschichtet, welcher im Wesentlichen aus einem Perlpolymerisat eines Acrylatmonomers besteht. Das Produkt wird auf eine Breite von 180 mm und eine Lauflänge von 25 m zugeschnitten und in Rollenform aufgewickelt.

### Beispiel 2

Auf ein imprägniertes und mit einem Topcoat versehenes Washi-Papier mit einem Flächengewicht von 50 g/m² (GMK496 ADP-1 von Daifuku Paper, Gifu, Japan) wurde auf die glattere der beiden Papierseiten mittels einer Drahtrakelbeschichtung ca. 1,0 g/m² (bezogen auf Trockenmasse) der Dispersion Resem P677 (Chukyo Yushi) aufgetragen, um eine hydrophobe und Trennkraft bewirkende Beschichtung zu erhalten.

Nach Trocknung der Releasebeschichtung bei 150°C im Trockenkanal einer Laborbeschichtungsanlage für ca. 1 min wird in Laufrichtung des Trägers auf der Papierrückseite (mattere der beiden Seiten) randbündig ein 8 mm breiter Streifen der Klebmasse Icapsira Acrilem PS 34-468 (Haftklebstoffauftrag von ca. 27 g/m²) aufgetragen.

Die übrige Fläche der Papierrückseite, d.h. der verbleibende Bereich, wird mit ca. 10 g/m² eines Haftklebers beschichtet, welcher im Wesentlichen aus einem Perlpolymerisat eines Acrylatmonomers besteht. Das Produkt wird auf eine Breite von 180 mm und eine Lauflänge von 25 m zugeschnitten und in Rollenform aufgewickelt.

### Beispiel 3

Es werden zwei Klebebandstreifen (I und II) in einem Teilbereich aufeinander laminiert. Klebebandstreifen I ist überlappend mit einer Breite von ca. 10 mm auf Klebebandstreifen II laminiert.

Streifen I hat eine Breite von 25 mm und besteht aus handelsüblichem Washi-Abdeckband, umfassend imprägniertes Washi-Papier mit Topcoat und einer Releasebeschichtung, mit einem Gesamtträgergewicht von 50 g/m² und einer reversiblen Acrylat-Haftklebmasse mit einem Auftragsmenge von ca. 28 g/m².

Klebeband II besteht aus eine Kraftpapier mit einer Grammatur von 45 g/m² (Advantage MG Kraft, Mondi), welches auf der glatteren der beiden Papierseiten mittels einer Drahtrakelbeschichtung ca. 2 g/m² (bezogen auf Trockenmasse) der Dispersion Resem P677 (Chukyo Yushi) beschichtet ist.

Auf der gegenüberliegenden Trägerseite des Klebebandaufbaus B wird vollflächig 1,5 g/m² eines wasserbasierten Primers (MT2 von ichemco) aufgetragen.

Nach jeweiliger Trocknung der Funktionsschichten auf Klebeband II im Trockenkanal einer Laborbeschichtungsanlage bei 150°C für ca. 1 min wurden auf die Seite mit dem Primerauftrag vollflächig ca. 10 g/m² eines Haftklebers aufgetragen, welcher im Wesentlichen aus einem Perlpolymerisat eines Acrylatmonomers besteht. Das Produkt wird auf eine Breite von 180 mm und eine Lauflänge von 25 m zugeschnitten und in Rollenform aufgewickelt.

### Vergleichsbeispiel

Als Basismaterial wird das kommerzielle Produkt Kip 334 Papier-Masker (Breite 180 mm) eingesetzt. Es besteht aus einem herkömmlichen Malerkreppklebeband, welches partiell auf ein unbeschichtetes Kraftpapier laminiert ist.

### Prüfmethode zur Anwendungseffizienz (Zeitbedarf der Anbringung)

Zur Prüfung, inwieweit sich mit dem erfindungsgemäßen Klebeband die Effizienz der Anwendung im Vergleich zu bisherigem Abklebelösungen verbessert, wird wie folgt vorgegangen:
Es wird eine Türzarge z.B. für eine spätere Spritzlackierung vorbereitet, indem der Kantenbereich und dessen Umgebung abgeklebt werden. Dazu wird um eine handelsübliche Türzarge mit den Außenmaßen von 2085 mm x 1000 mm, welche in einer mit Raufaser tapezierten Wandöffnung eingebaut ist, umlaufend abgeklebt.

Die breiten Abdeckmaterialien aus den Beispielen 1, 2 und 3 werden zunächst präzise an der Kante zwischen Zarge und Wand angesetzt, angedrückt und abgerollt, wobei auf eine zügige, aber dennoch sorgfältige Anbringung zu achten ist. Der Prüfablauf sieht vor, dass eine im Abkleben geübte Person jeweils den gesamten Abklebevorgang mit einem Produkt dreimal ausführt. Dabei wird das jeweilige Ende der Rolle mit einer Schere abgeschnitten (notwendig an den beiden oberen Ecken der Zarge und am Ende). Bei den erfindungsgemäßen Materialien der Beispiele 1 bis 3 sind lediglich die entsprechenden Abdeckbänder der Beispiele notwendig, um eine vollflächig anliegende Abdeckung zu erzielen. Bei Verwendung des Abdeckbands gemäß Vergleichsbeispiel wird - um dasselbe Abdeckresultat zu erzielen - im Test die Außenkante des Abdeckmaterials umlaufend durch Verkleben mit einem handelsüblichen einfachen Malerkrepp-Abdeckband fixiert.

Es wurden folgende Zeiten für die Abdeckarbeiten ermittelt, welche die Zeitersparnis bei Einsatz der erfindungsgemäßen Abdeckbänder belegen (Tabelle 1):

**Tabelle 1. Vergleich der für das Anbringen von Abdeckbändern notwendigen Arbeitszeit**

| | Arbeitszeit* | | | |
|---|---|---|---|---|
| | Beispiel 1 | Beispiel 2 | Beispiel 3 | Vergleichsbeispiel |
| Versuch 1 | 168 s | 170 s | 159 s | 229 s |
| Versuch 2 | 159 s | 161 s | 162 s | 217 s |
| Versuch 3 | 163 s | 169 s | 167 s | 234 s |
| Mittel | 163,4 | 166, 7 | 162, 7 | 226,7 s |

| | | | | |
|---|---|---|---|---|
| *bis zur Fertigstellung einer umlaufend geschlossenen Abdeckung der die Zarge umgrenzenden Wand | | | | |

### Bezugszeichenliste

- A: Erster Bahnbereich
- B: Zweiter Bahnbereich
- C: Dritter Bahnbereich
- D: Äußerer Bahnbereich
- 1: Trägerbahn
- 2: Erste Haftkleberschicht im ersten Bahnbereich
- 3: Zweite Haftkleberschicht im zweiten Bahnbereich
- 21a, 31a: Erstes Material
- 21b, 31b: Zweites Material
- 22, 32: Erste Haftkleberschicht
- 23, 33: Zweite Haftkleberschicht
- 34, 35: Klebeband mit Kleberschicht

## Patentansprüche

1. Abdeckband, umfassend
a. eine Trägerbahn (1) mit einem ersten Bahnbereich (A) und einem zweiten Bahnbereich (B) und
b. einer ersten Haftkleberschicht (2, 22, 32) in dem ersten Bahnbereich (A) und einer zweiten Haftkleberschicht (3, 23, 33) in dem zweiten Bahnbereich (B),
wobei
iii) die Klebkraft in dem ersten Bahnbereich (A) höher ist als die Klebkraft in dem zweiten Bahnbereich (B) und
iv) die erste Haftkleberschicht (2, 22, 32) und die zweite Haftkleberschicht (3, 23, 33) auf der ersten Seite der Trägerbahn (1) aufgebracht sind.

2. Abdeckband nach Anspruch 1, **dadurch gekennzeichnet, dass** die Trägerbahn (1) auf der ersten Seite einen dritten Bahnbereich (C) aufweist,
wobei der dritte Bahnbereich (C) vorzugsweise nicht mit Kleber beschichtet ist oder keine offene Kleberbeschichtung aufweist.

3. Abdeckband nach Anspruch 1 oder 2, **dadurch gekennzeichnet, dass** die Trägerbahn auf der ersten Seite neben dem zweiten Bahnbereich (B) einen äußeren Bahnbereich (D) aufweist,
wobei der äußere Bahnbereich (D) vorzugsweise nicht mit Kleber beschichtet ist.

4. Abdeckband nach einem der vorhergehenden Ansprüche, **dadurch gekennzeichnet, dass** die erste Haftkleberschicht (2, 22, 32) in dem ersten Bahnbereich (A) mindestens im äußeren Randbereich der Trägerbahn (1) vollflächig aufgetragen ist.

5. Abdeckband nach einem der vorhergehenden Ansprüche, **dadurch gekennzeichnet, dass** der erste Bahnbereich (A) eine Breite von 2 mm bis 50 mm besitzt, vorzugsweise 4 bis 30 mm, insbesondere 8 bis 25 mm.

6. Abdeckband nach einem der vorhergehenden Ansprüche, **dadurch gekennzeichnet, dass** die zweite Haftkleberschicht (3, 23, 33) in dem zweiten Bahnbereich (B) nicht vollflächig aufgetragen ist.

7. Abdeckband nach einem der vorhergehenden Ansprüche, **dadurch gekennzeichnet, dass** der zweite Bahnbereich (B) breiter ist als der erste Bahnbereich,
wobei der zweite Bahnbereich (B) vorzugsweise eine Breite von 5 bis 125 cm besitzt, bevorzugter 7,5 bis 60 cm, insbesondere 10 bis 25 cm.

8. Abdeckband nach einem der vorhergehenden Ansprüche, **dadurch gekennzeichnet, dass** die Haftkleberschicht (2, 22, 32) im ersten Bahnbereich (A) so aufgebracht ist, dass die Klebkraft der Haftkleberschicht (2, 22, 32) innerhalb des ersten Bahnbereichs (A) vom Rand der Trägerbahn in Richtung des zweiten Bahnbereichs (B) abfällt.

9. Abdeckband nach einem der vorhergehenden Ansprüche, **dadurch gekennzeichnet, dass** die Trägerbahn (1) aus einem Material besteht, das im ersten Bahnbereich (A) die erste Haftkleberschicht (2) und im zweiten Bahnbereich (B) die zweite Haftkleberschicht (3) trägt.

10. Abdeckband nach einem der Ansprüche 1 bis 8, **dadurch gekennzeichnet, dass** die Trägerbahn mindestens zwei Materialien umfasst, wobei das erste Material (21a, 31a) in dem ersten Bahnbereich A die erste Haftkleberschicht (22, 32) trägt und das zweite Material (21b, 31b) in dem zweiten Bahnbereich (B) die zweite Haftkleberschicht (23, 33) trägt.

11. Abdeckband nach Anspruch 10, **dadurch gekennzeichnet, dass** das erste Material (21a) auf der Seite, welche die erste Haftkleberschicht (22) trägt, in einem dritten Bahnbereich (C) einen Klebstoff trägt, und das zweite Material (21b) auf seiner ersten Seite die zweite Haftkleberschicht (23) trägt und auf seiner zweiten Seite auf dem Klebstoff des dritten Bahnbereichs (C) aufliegt.

12. Abdeckband nach Anspruch 10, **dadurch gekennzeichnet, dass** auf der zweiten Seite der zwei Materialien (31a, 31b) der Trägerbahn ein Klebeband mit Kleberschicht (34, 35) aufgebracht ist, wobei das Klebeband mit Kleberschicht (34, 35) das erste Material (31a) mit dem zweiten Material (31b) verbindet,
wobei vorzugsweise.
- das Klebeband mit Kleberschicht (34, 35) auf der zweiten Seite der zwei Materialien (31a, 31b) der Trägerbahn den ersten Bahnbereich (A) und den zweiten Bahnbereich (B) jeweils nur zum Teil bedeckt, oder
- das Klebeband (34, 35) auf der zweiten Seite der zwei Materialien (31a, 31b) der Trägerbahn den ersten Bahnbereich (A) vollständig und den zweiten Bahnbereich (B) nur zum Teil bedeckt.

13. Abdeckband nach Anspruche 12, **dadurch gekennzeichnet, dass** das erste Material (31a) und das zweite Material (31b) voneinander beabstandet sind.

14. Abdeckband nach Anspruch 10, **dadurch gekennzeichnet, dass** auf der ersten Seite der zwei Materialien (31a, 31b) der Trägerbahn auf der ersten Haftkleberschicht (32) ein Klebeband (34) aufgebracht ist, wobei das Klebeband (34) das erste Material (31a) mit dem zweiten Material (31b) im dritten Bahnbereich (C) verbindet,
wobei vorzugsweise eine Kleberschicht (35) auf dem Klebeband (34) aufgebracht ist und die Kleberschicht (35) auf der ersten Haftkleberschicht (32) und der zweiten Haftkleberschicht (33) aufliegt.

15. Abdeckband nach Anspruch 10, **dadurch gekennzeichnet, dass** das zweite Material (31b) auf seiner ersten Seite in dem zweiten Bahnbereich (B) die zweite Haftkleberschicht (33) trägt, das zweite Material (31b) auf seiner ersten Seite ferner eine Kleberschicht (35) trägt und die Kleberschicht (35) die zweite Seite des ersten Materials (31a) und die erste Seite des zweiten Material (31b) verbindet, wobei das erste Material auf der ersten Seite in dem ersten Bahnbereich (A) die erste Haftkleberschicht (32) trägt,
wobei vorzugsweise die Kleberschicht (35) die gesamte zweite Seite des ersten Materials (31a) bedeckt und mit dem zweiten Material (31b) verbindet.

16. Abdeckband nach einem der vorhergehenden Ansprüche, **dadurch gekennzeichnet, dass** mindestens eine der zwei Haftkleberschichten (2, 22, 32; 3, 23, 33) ein Perlpolymerisat umfasst,
wobei vorzugsweise die Haftkleberschicht (2, 22, 32) in dem zweiten Bahnbereich (B) ein Perlpolymerisat umfasst.
